# EUROPÄISCHE PATENTANMELDUNG

(11) **EP 3 584 652 A1**
(43) Veröffentlichungstag der Anmeldung: **25.12.2019**
(21) Anmeldenummer: 18178189.9
(22) Anmeldetag: 18.06.2018
(51) Int. Cl.: G05B 19/418, G06Q 50/04, G06Q 10/06

(54) **VERFAHREN ZUM BEREITSTELLEN EINER EINEN MONTAGEABLAUF FÜR DIE PRODUKTERSTELLUNG BETREFFENDEN ANWEISUNG**

(71) Anmelder: Siemens Aktiengesellschaft, 80333 München (DE)
(72) Erfinder: Boschert, Stefan, 85579 Neubiberg (DE); Gonnermann, Clemens, 80333 München (DE); Leiber, Daria, 85784 Garching (DE); Michniewicz, Joachim, 80809 München (DE)

(57) **Zusammenfassung**

Gemäß einer Ausführungsform wird ein Verfahren zum Bereitstellen einer Anweisung, welche einen Montageablauf für die Erstellung eines Produktes betrifft, offenbart. Dabei weist das Verfahren die Schritte a) Empfangen von Produktdaten, welche für die Erstellung des Produktes kennzeichnend sind, b)Empfangen von Montagedaten, welche für eine Montageanordnung mit einer oder mehreren Montagestationen zum Erstellen des Produktes kennzeichnend sind, c) Ermitteln der Anweisung basierend auf den empfangenen Produktdaten und den empfangenen Montagedaten und d) Ausgeben der ermittelten Anweisung auf. Gemäß einer weiteren Ausführungsform wird eine Vorrichtung offenbart, welche zum Bereitstellen einer Anweisung eingerichtet ist. Dabei betrifft die Anweisung einen Montageablauf für die Erstellung eines Produktes.

## Beschreibung

### TECHNISCHES GEBIET

Gemäß einer Ausführungsform wird ein Verfahren zum Bereitstellen einer Anweisung, welche einen Montageablauf für die Erstellung eines Produktes betrifft, offenbart. Gemäß einer weiteren Ausführungsform wird eine Vorrichtung, welche zum Bereitstellen einer Anweisung eingerichtet ist, offenbart, wobei die Anweisung einen Montageablauf für die Erstellung eines Produktes betrifft.

### HINTERGRUND

Das stetige Streben von Wirtschaft und Gesellschaft nach technischen Fortschritt veranlasst Forschungs- und Entwicklungsinstitutionen verbesserte industrielle Produkte bereitzustellen. Dabei weisen viele dieser verbesserten industriellen Produkte gegenüber bereits bestehenden Erzeugnissen eine erhöhte Komplexität auf, basierend auf welchen neue technische Möglichkeiten eröffnet werden. Die Erstellung derartiger Produkte erhöhter Komplexität gehen jedoch mit neuen Herausforderungen im Bereich der Herstellung dieser Produkte einher, sodass die Art und Weise der Montage eines derartigen industriellen Produkts von einer stetig steigenden technischen und wirtschaftlichen Bedeutung ist.

Mit der zunehmenden Komplexität dieser industriellen Produkte steigt auch die Anzahl möglicher Montagewege, mit welchen versucht werden kann, zu einem erwünschten Endprodukt zu gelangen. Derartige Herstellungswege sind jedoch keineswegs als gleichwertig anzusehen, sondern weisen vielmehr gravierende Unterschiede im Bereich der Zuverlässigkeit sowie der Effizienz auf. Demzufolge werden inzwischen IT-basierte Maßnahmen eingesetzt, welche einem Benutzer Informationen betreffend technisch möglichen Montagewegen bereitstellen.

Ein derartiger Ansatz zur Prüfung der Zuverlässigkeit von Montagewegen zur Erstellung eines Produkts ist der Ansatz der virtuellen Demontage (*"Assembly by Disassembly"* - Ansatz). Basierend auf 3D-CAD-Daten des zu erstellenden Produkts werden hierbei die Endprodukte in einer Vielzahl verschiedener Demontagelinien sukzessive auseinandergebaut, wobei überprüft wird, ob eine derartige Demontagelinie kollisionsfrei zu beschreiten ist. Hierdurch können Montagelinien bestimmt werden, welche für die Montage eines aus einer Vielzahl verschiedener Bauelemente bestehenden Produkts grundsätzlich zulässig sind.

Nachteilig hieran ist jedoch, dass bei einer derartigen Herangehensweise vor Ort verfügbare Montageressourcen zur Erstellung des Produkts keine Berücksichtigung finden. Dies kann dazu führen, dass für einen Montageprozess kein spezifischer Montageablauf empfohlen werden kann, sondern vielmehr eine Vielzahl möglicher Montageabläufe ausgegeben wird.

### KURZZUSAMMENFASSUNG DER ERFINDUNG

Demzufolge besteht ein Bedarf an Maßnahmen, auf deren Basis ein bevorzugter Montagablauf gezielt ausgegeben werden kann.

Gemäß einiger Ausführungsformen liegt daher die Aufgabe zugrunde ein Verfahren bereitzustellen, mittels welchem ein bevorzugter Montageablauf gezielt ausgegeben wird.

Gemäß einiger weiterer Ausführungsformen liegt daher die Aufgabe zugrunde technische Mittel bereitzustellen, mittels welcher das oben genannte Verfahren ausgeführt werden kann.

Diese Aufgaben werden gemäß entsprechender Ausführungsformen durch eine Verfahren zum Bereitstellen einer Anweisung gemäß Anspruch 1 sowie durch eine Vorrichtung, welche zum Bereitstellen einer Anweisung eingerichtet ist, gemäß Anspruch 14 gelöst. Weitere diese Ausführungsformen betreffende Ausgestaltungen werden in den abhängigen Ansprüchen beansprucht.

Gemäß einer Ausführungsform wird ein Verfahren zum Bereitstellen einer Anweisung, welche einen Montageablauf für die Erstellung eines Produktes betrifft, offenbart. Das Verfahren weist dabei die Schritte a) Empfangen von Produktdaten, welche für die Erstellung des Produktes kennzeichnend sind, b) Empfangen von Montagedaten, welche für eine Montageanordnung mit einer oder mehreren Montagestationen zum Erstellen des Produktes kennzeichnend sind, c) Ermitteln der Anweisung basierend auf den empfangenen Produktdaten und den empfangenen Montagedaten und d) Ausgeben der ermittelten Anweisung auf.

Basierend auf einem derartigen Ansatz wird es ermöglicht, für die Ausgabe einer Anweisung, welchen einen Montageablauf für die Erstellung eines Produkt betrifft, Spezifikationen einer Montageanordnung mit einer oder mehreren Montagestationen zum Erstellen des Produktes zusätzlich heranzuziehen. Demzufolge basiert die Ausgabe der Anweisung, welcher spezifische Montageablauf bevorzugt ist, nicht nur auf Spezifika des zu erstellenden Produkts, sondern auch auf Spezifika der lokal zur Verfügung stehenden Hilfsmittel und/oder Ressourcen. Dies führt einerseits dazu, dass die nun ausgegebene Anweisung optimal mit den jeweiligen Gegebenheiten abgestimmt ist, und reduziert andererseits die Anzahl vorgeschlagener Montageabläufe, wodurch eine verbesserte Effizienz und Benutzerfreundlichkeit für die Bestimmung des Montageablaufs erzielt wird. Basierend auf einer verbesserten Effizienz kann sich auch schnellere Markteinführung neuartiger Produkte ergeben. Auch kann dieser Ansatz die Zuverlässigkeit des durchzuführenden Montageablaufs verbessern, da Montageabläufe, die zwar mit dem zu erstellenden Produkt, nicht aber mit den lokalen Ressource zusammenpassen, aus dem Lösungsraum eliminiert und somit nicht als Anweisung einem Benutzer ausgegeben werden.

Gemäß einer weiteren Ausführungsform wird eine Vorrichtung offenbart, welche zum Bereitstellen einer Anweisung eingerichtet ist. Dabei betrifft die Anweisung einen Montageablauf für die Erstellung eines Produktes. Die Vorrichtung weist eine erste Empfangseinrichtung auf, welche zum Empfangen von Produktdaten, welche für die Erstellung des Produktes kennzeichnend sind, eingerichtet ist. Die Vorrichtung weist ferner eine zweite Empfangseinrichtung auf, welche zum Empfangen von Montagedaten, welche für eine Montageanordnung zum Erstellen des Produktes kennzeichnend sind, eingerichtet ist. Die Vorrichtung weist ferner eine Ermittlungseinrichtung auf, welche zum Ermitteln der Anweisung basierend auf den empfangenen Produktdaten und den empfangenen Montagedaten eingerichtet ist. Die Vorrichtung weist ferner eine Ausgabeeinrichtung auf, welche zum Ausgeben der ermittelten Anweisung eingerichtet ist.

Basierend auf einem derartigen Ansatz wird es ermöglicht, das oben genannte erfindungsgemäße Verfahren mit möglichst einfachen technischen Mitteln auszuführen.

Unter einer Anweisung im Sinne der Erfindung ist ein Ausgabesignal zu verstehen, basierend auf welchem eine Entscheidung über Abläufe getroffen werden kann, welche die Erstellung eines Produktes betreffen. Die Abläufe können sich dabei auf Montageabläufe beziehen. Die Entscheidung kann dabei von einem Benutzer getroffen werden. Die Anweisung kann eine oder mehrere Handlungsempfehlungen umfassen, wobei die Handlungsempfehlungen relativ zueinander priorisiert werden können.

Unter einem Montageablauf im Sinne der Erfindung ist eine sequenzielle Vorgehensweise zur Erstellung eines Produktes mittels technischer Hilfsmittel zu verstehen. Die technischen Hilfsmittel können manuelle und/oder automatisierte technische Werkzeuge umfassen. Der Montageablauf kann durch eine Montageanordnung umgesetzt werden, welche eine oder mehrere Montagestationen aufweist. Dabei können verschiedene Abläufe zur Erstellung und/oder zum Zusammenbau des Produktes an verschiedenen Montagestationen während des Montageablaufs bewerkstelligt werden.

Unter Produktdaten im Sinne der Erfindung sind Informationen zu verstehen, welche Spezifikationen betreffend ein zu erstellendes Produkt umfassen. Derartige Spezifikation können sich auf eine räumliche Struktur im Endstadium oder eines Zwischenstadiums des zu erstellenden Produkts beziehen. Derartige Spezifikation können sich ferner auf eine räumliche Struktur einzelner Bauelemente des zu erstellenden Produkts beziehen. Derartige Spezifikationen können sich ferner auf eine Verbindungsfähigkeit verschiedener Bauelemente des zu erstellenden Produkts beziehen. Die Spezifikationen können ferner Informationen umfassen, welche angeben, in welcher Reihenfolge die verschiedenen Bauelemente des zu erstellenden Produkts verbunden und/oder zusammengebaut werden können.

Unter Montagedaten im Sinne der Erfindung sind Informationen zu verstehen, welche Spezifikationen betreffend einer Montageanordnung mit einer oder mehreren Montagestationen umfassen. Derartige Spezifikationen können eine Anzahl bereitgestellte Montagestationen, Beförderungsmittel zwischen den bereitgestellten Montagestationen und eine Richtungsabhängigkeit eines derartigen Beförderungsmittels betreffen. Derartige Spezifikationen können ferner die Ausstattung einer oder mehrerer Montagestationen der Montageanordnung betreffen. Eine derartige Ausstattung kann sich beispielsweise auf vor Ort bereitgestellte technische Hilfsmittel und/oder Werkzeuge sowie auf eine Erreichbarkeit sowie räumliche Ressourcen für eine technische Bedienperson beziehen. Derartige technische Hilfsmittel können beispielsweise die Fähigkeit einer Montagestation umfassen, das zu erstellende Produkt beziehungsweise ein Zwischenprodukt zu halten, drehen oder fügen.

Gemäß einer Ausführungsform des Verfahrens weist die ermittelte Anweisung Informationen betreffend eine Montageabfolge des zu erstellende Produkts auf. Gemäß einer Ausführungsform des Verfahrens wird mindestens einem Schritt der Montageabfolge eine der Montagestationen der Montageanordnung zugewiesen.

Auf diese Weise stellt die Anweisung sequenzielle Instruktionen bereit, welche angeben, wie ein Montageablauf für die Erstellung des Produktes in den gegebenen räumlichen Montageressourcen zu implementieren ist. Eine technische Fachkraft, welche mit der Planung des Montageablaufs beauftragt ist, kann somit auf möglichst einfache und benutzerfreundliche Weise die ausgegeben Anweisung auf die räumlichen Montagegegebenheiten umsetzen.

Gemäß einer Ausführungsform des Verfahrens erfolgt das Ermitteln der Anweisung mittels eines Planungsalgorithmus, welcher auf einer virtuellen Demontage des zu erstellenden Produkts basiert.

Auf diese Weise werden für die Bestimmung der Anweisung die Montageressourcen nur für derartige Abläufe zur Erstellung des Produktes herangezogen, welche mittels des Planungsalgorithmus als kollisionsfrei verifiziert worden sind, wogegen Montageabläufe, welche bei dem Zusammenbau des Produkts mit einer Kollision einhergehen, für die Verarbeitung nicht in Betracht gezogen werden. Hierdurch ergeben sich somit Effizienzvorteile bei der Prozessführung und der gezielten Ermittlung einer empfehlenswerten Anweisung.

Gemäß einer Ausführungsform des Verfahrens umfassen die Montagedaten Informationen betreffend der Montagefähigkeit der einen oder mehreren Montagestationen der Montageanordnung.

Auf diese Weise werden die spezifischen Kapazitäten einzelner Montagestationen bei der gezielten Ermittlung eines bevorzugten Montageablaufs berücksichtigt. Diese können sich beispielsweise auf manuelle und/oder automatisierte Hilfsmittel und Werkzeuge beziehen, mittels welcher ein entsprechender Montageschritt zur Erstellung des Produktes bewerkstelligt wird. Somit erfolgt hierdurch eine besonders detailgetreue Bestimmung eines bevorzugten Montageablaufs, wodurch die Auswahlentscheidung für einen spezifischen, bevorzugten Montageablauf verbessert wird.

Gemäß einer Ausführungsform des Verfahrens umfassen die Montagedaten Informationen betreffend mindestens eines Beförderungsmittels zwischen Montagestationen der Montageanordnung. Gemäß einer Ausführungsform des Verfahrens weisen die Informationen der Montagedaten eine Richtungsabhängigkeit auf.

Auf diese Weise werden Transportmechanismen, welche in der Montageanordnung zur Verfügung gestellt sind, bei dem gezielten Finden eines bevorzugten Montageablaufs berücksichtigt. Mögliche Montageabläufe, welche in Ermangelung des Vorliegens geeigneter Beförderungsmittel zwischen spezifischen Montagestationen zu Kollisionen und/oder zur Staubildung neigen, können somit identifiziert werden. Derartig identifizierte, potentielle Montageabläufe werden demzufolge nicht in der Anweisung zur Durchführung empfohlen.

Gemäß einer Ausführungsform des Verfahrens umfasst die ermittelte Anweisung eine Priorisierungsliste möglicher Montageabläufe. Gemäß einer Ausführungsform des Verfahrens basiert die Priorisierungsliste der möglichen Montageabläufe auf einer realisierbaren Montagedauer des zu erstellenden Produkts.

Auf diese Weise werden verschiedene potentielle Montageabläufe, welche auf Basis der durchgeführten Ermittlungsverfahrens unter Berücksichtigung der Produktdaten und der Montagedaten in unterschiedlichen Ausmaß als geeignet erscheinen, entsprechend ihrem Eignungsausmaß geordnet ausgegeben. Das Verfahren stellt somit einen besonders bevorzugten Montageablauf sowie weitere bevorzugte Montageablaufalternativen bereit, wodurch eine verbesserte Flexibilität in der Montagedurchführung des Produkts ermöglicht wird.

Gemäß einer Ausführungsform des Verfahrens weist die empfangenen Montagedaten ferner Strukturdaten auf, welche für das Vorliegen von Hauptlinien, welche eine Endmontage des zu erstellenden Produkts betreffen, und Nebenlinien, welche eine Vormontage des zu erstellenden Produkts betreffen, in der Montageanordnung kennzeichnend sind.

Auf diese Weise werden für die Auswahl bevorzugter Montageabläufe zudem die Anordnung eines Endmontageablaufs relativ zu einem oder mehreren Vormontageabläufen berücksichtigt, sodass die örtlichen Montagegegebenheiten und deren Verknüpfungen bei der Ermittlung bevorzugter Montageabläufe besonders detailgetreu berücksichtigt werden. Hierdurch wird die Auswahl bevorzugter Montageabläufe weiter optimiert.

Gemäß einer Ausführungsform des Verfahrens weisen die Produktdaten ein dreidimensionales CAD-Modell des zu erstellenden Produkts auf.

Auf diese Weise wird das zu erstellende Produkt auf technisch einfache Weise detailgetreu abgebildet.

Gemäß einer Ausführungsform des Verfahrens basieren die empfangenen Montagedaten auf einer Montagesimulation oder auf einer realen Montagkonfiguration.

Durch die Verwendung einer Montagesimulation können die Montagedaten automatisiert und somit auf benutzerfreundliche Weise mit geringem Aufwand bereitgestellt werden. Durch die Verwendung einer realen Montagekonfiguration können Änderungen in der Montagekonfiguration auf besonders zuverlässige Weise berücksichtigt werden.

Gemäß einer Ausführungsform des Verfahrens erfolgt das Ausgeben der ermittelten Anweisung mittels einer graphischen Visualisierungseinrichtung.

Durch eine derartige Datenaufbereitung werden bevorzugte Montageabläufe auf möglichst benutzerfreundliche Weise ausgegeben.

Gemäß einer Ausführungsform ist die Vorrichtung zum Ausführen eines Verfahrens gemäß einer der hierin genannten Ausführungsformen eingerichtet.

Die im Vorstehenden beschriebenen, die jeweilige Ausführungsform betreffenden Aspekte und die dazugehörigen, zur Weiterbildung des Verfahrens offenbarten Maßnahmen gelten auch für die Ausführungsformen und die dazugehörigen Weiterbildungen der zugehörigen Vorrichtung.

Unter einer virtuellen Demontage im Sinne der Erfindung ist eine IT-basierte Vorgehensweise zu verstehen, bei welcher ein Vorliegen von Kollisionen bei der Erstellung des Produktes mittels einer virtuellen Demontage des fertig gestellten Produkts überprüft wird. Dabei können verschiedene potentielle Montageabläufe virtuell überprüft werden. Eine derartige virtuelle Demontage kann auf 3D-CAD-Daten basieren und das sukzessive Entfernen einzelner Bauelemente des Produkts modellieren, wobei überprüft werden kann, ob ein derartiges sukzessives Entfernen einem kollisionsfreien Montageablauf bei der Erstellung des Produktes entspricht. Bei einer derartigen Prüfung können die Produktdaten und die Montagedaten herangezogen werden.

Unter einer Montagefähigkeit im Sinne der Erfindung sind Ressourcen einzelner Montagestationen der Montageordnung zu verstehen, basierend auf welchen ein möglicher Beitrag der einzelnen Montagestationen bei der Erstellung des Produktes festgelegt werden kann. Die Montagefähigkeit kann auf den bei der jeweiligen Montagestationen bereitgestellten technischen Hilfsmitteln basieren. Derartige technische Hilfsmittel können manuelle und/oder automatisierte Werkzeuge umfassen. Die Montagefähigkeit der einzelnen Montagestationen kann ferner auf gegebenen räumlichen Kapazitäten sowie der Erreichbarkeit für ein technisches Fachpersonal basieren.

Unter einer Priorisierungsliste im Sinne der Erfindung ist eine geordnete Angabe von Informationen zu verstehen, welche einen Montageablauf für die Erstellung eines Produktes betreffen. Dabei können die Informationen potentielle Anweisungen bezüglich des Montageablaufs umfassen. Die Priorisierungsliste kann dabei ferner potentielle Vorgehensweisen im Montageablauf in einer geordneten Liste wiedergeben, wobei eine derartige Rangordnung einer IT-basierten Empfehlung für das Vorgehen bei der Montage des Produktes entspricht. Eine derartige IT-basierte Empfehlung kann beispielsweise auf einer virtuellen Demontage des zu erstellenden Produkts basieren.

Unter Strukturdaten im Sinne der Erfindung sind Informationen zu verstehen, welche Spezifikationen betreffend das Vorliegen und/oder die Ausgestaltung von Untereinheiten der Montagearten Anordnung umfassen. Dabei können derartige Strukturdaten Informationen umfassen, welche die Ausgestaltung einer Hauptlinie zur Erstellung einer Endmontage des zu erstellenden Produkts kennzeichnen. Ferner können derartige Strukturdaten Informationen umfassen, welche die Ausgestaltung einer oder mehrerer Nebenlinien zur Erstellung einer Vormontage des zu erstellenden Produkts kennzeichnen. Die Strukturdaten können ferner Informationen umfassen, welche die eine oder die mehreren Nebenlinien relativ zu der Hauptlinie miteinander in Bezug setzen.

Obige sowie weitere Vorteile, Merkmale und Anwendungsmöglichkeiten einer Ausführungsform ergeben sich aus der nachfolgenden Beschreibung von bevorzugten Ausführungsbeispielen anhand von wenigsten teilweise schematischen Figuren.

### KURZE BESCHREIBUNG DER FIGUREN

- In Figur 1: ist ein Produkt schematisch dargestellt, welches mittels eines Montageablaufs erstellt werden kann, wobei der Montageablauf auf einer bereitgestellten Anweisung gemäß einer Ausführungsform basieren kann.
- In Figur 2: ist eine Montageanordnung zur Realisierung eines Montageablaufs basierend auf einer Anweisung gemäß einer Ausführungsform schematisch dargestellt.
- In Figur 3: ist ein Flussdiagramm zum Bereitstellen einer Anweisung betreffend einen Montageablauf für die Erstellung eines Produkts gemäß einer Ausführungsform dargestellt.
- In Figur 4: ist eine Vorrichtung, welche zum Bereitstellen einer Anweisung betreffend einen Montageablauf für die Erstellung eines Produkts eingerichtet ist, gemäß einer Ausführungsform schematisch dargestellt.

### DETAILLIERTE BESCHREIBUNG VON AUSFÜHRUNGSFORMEN

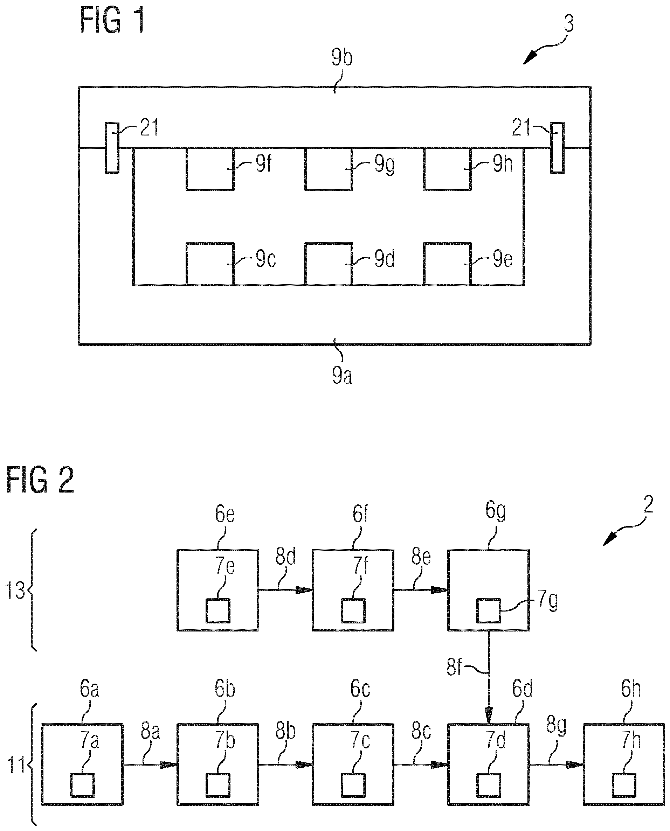

In Figur 1 ist ein Produkt 3 schematisch dargestellt, welches mittels eines Montageablaufs erstellt werden kann, wobei der Montageablauf auf einer bereitgestellten Anweisung 1 gemäß einer Ausführungsform basieren kann.

Dieses zu erstellende Produkt 3 kann aus einer Vielzahl identischer oder unterschiedlicher Bauteile 9a-9h gebildet werden. Dabei kann die spezifische Ausgestaltung des zu erstellenden Produkts 3 zumindest teilweise eine sequenzielle Abfolge vorgeben, in welcher die Bauteile 9a-9h zu dem zu erstellenden Produkts 3 zusammen zu bauen sind. Gemäß des in Figur 1 dargestellten Produkts 3 ist es beispielsweise erforderlich, die Bauteile 9c-9e an dem Bauteil 9a anzubringen sowie die Bauteile 9f-9h an dem Bauteil 9b anzubringen, bevor ein Befestigen des Bauteils 9b mittels Befestigungsmitteln 21 an dem Bauteil 9a zu bewerkstelligen ist. Derartige Limitationen können sich beispielsweise dadurch ergeben, dass durch das Anbringen des Bauteils 9b an dem Bauteil 9a mittels den Befestigungsmitteln 21 der Anbringungsbereich, in welchem die Bauteile 9c bis 9h an den Bauteil 9a beziehungsweise 9b angebracht sind, versiegelt wird und somit für weitere Montageschritte nicht mehr zugänglich ist. Informationen über derartige Limitationen können beispielsweise in den Produktdaten 4 implementiert sein.

In solchen Fällen kann es erforderlich und/oder zielführend sein, dass zunächst im Rahmen von Vormontagen ein erstes Zwischenprodukt, welches die Bauteile 9a, 9c, 9d und 9e enthält, sowie ein zweites Zwischenprodukt, welches die Bauteile 9b, 9f, 9g, 9h enthält, erstellt wird. In einem solchen Fall können nachfolgend das erste Zwischenprodukt und das zweite Zwischenprodukt im Rahmen einer Endmontage durch die Befestigungsmittel 21 miteinander verbunden werden.

In Figur 2 ist eine Montageanordnung 2 zur Realisierung eines Montageablaufs basierend auf einer Anweisung 1 gemäß einer Ausführungsform schematisch dargestellt. Dabei kann die Montageanordnung 2 eine Vielzahl an Montagestationen 6a-6h aufweisen. Jede der Montagestationen 6a-6h kann dabei ein Montagezubehör 7a-7h aufweisen, wobei das Montagezubehör 7a-7h der verschiedenen Montagestationen 6a-6h gleich oder unterschiedlich sein kann. Derartiges Montagezubehör 7a-7h kann beispielsweise eine manuelle und/oder automatisierte Montage der Bauelemente 9a-9h und/oder der Zwischenprodukte ermöglichen. Die Montagestationen 6a-6h können in einer oder mehreren Strukturen konfiguriert sein. Gemäß der in Figur 2 dargestellten Ausführungsform sind die Montagestationen 6a-6h in einer Hauptlinie 11, in welcher mindestens eine Endmontage bewerkstelligt wird, sowie in einer Nebenlinie 13, in welcher mindestens eine Formmontage bewerkstelligt wird, strukturiert. Dabei kann die Montage in der Hauptlinie 11 sowie der Nebenlinie 13 parallel zueinander erfolgen. Die Montagestationen 6a-6h können ferner mit Beförderungsmittel 8a-8g verkettet sein, wobei jede Montagestation 6a-6h mit einer beliebigen Anzahl an Beförderungsmittel 8a-8g verbunden sein kann.

Gemäß der in Figur 2 dargestellten Ausführungsform ist jede der Beförderungsmittel 8a-8g unidirektional gerichtet. Im Rahmen der vorliegenden Offenbarung ist jedoch auch denkbar und beabsichtigt, dass mindestens eines der Beförderungsmittel 8a-8g mehrdirektional, beispielsweise bidirektional, gerichtet ist. Gemäß der vorliegenden Offenbarung kann ferner jede Montagestationen 6a-6h dazu eingerichtet sein, einen oder mehrere Schritte in der Montageabfolge zur Erstellung des Produkts 3 zu bewerkstelligen. Spezifika betreffend die Ausgestaltung der Montageanordnung 2 können beispielsweise in den Montagedaten 5 implementiert sein. Ferner können Spezifika bezüglich des Vorliegens von Hauptlinien 11 und Nebenlinien 13 in den Strukturdaten 10 implementiert sein.

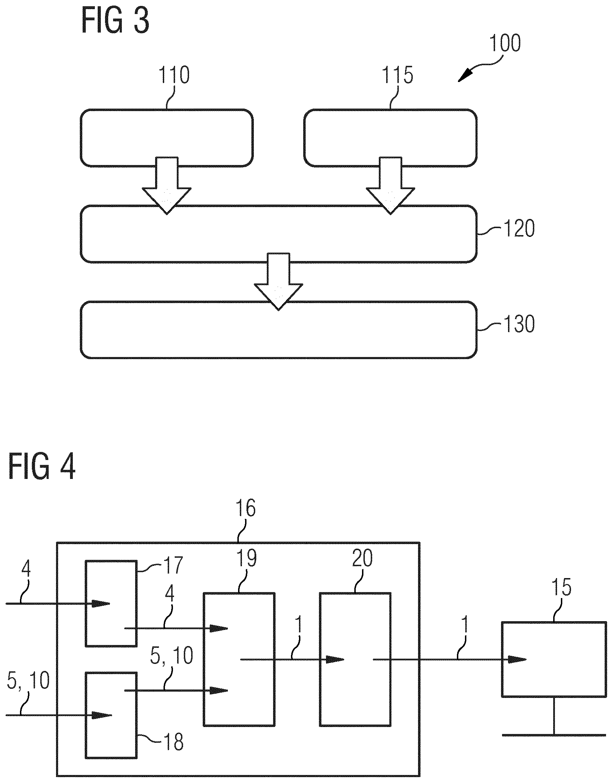

In Figur 3 ist ein Verfahren 10 zum Bereitstellen einer Anweisung 1 betreffend einen Montageablauf für die Erstellung eines Produkts 3 gemäß einer Ausführungsform dargestellt.

Bei 110 kann das Verfahren 100 dabei Produktdaten 4 empfangen, welche für die Erstellung des Produktes 3 kennzeichnend sind. Die Produktdaten 4 können ein dreidimensionales CAD-Modell des zu erstellenden Produkts 3 aufweisen. Dabei kann vorgesehen sein, dass zur Verfahrensanwendung ein Benutzer das dreidimensionale CAD-Modell des zu erstellenden Produkts sowie Montagefähigkeiten von den Montagestationen 6a-6h auswählt, welche zur Montage des Produktes 3 genutzt werden sollen.

Bei 115 kann das Verfahren 100 dabei Montagedaten 5 empfangen, welche für eine Montageanordnung 2 mit einer oder mehreren Montagestationen 6 zum Erstellen des Produktes 3 kennzeichnend sind. Dabei können die Montagedaten 5 Informationen betreffend der Montagefähigkeit der einen oder mehreren Montagestationen 6a-6h der Montageanordnung 2 umfassen, wobei zur Beschreibung der Montagefähigkeit lösungsneutrale Skills verwendet werden. Ferner können die Montagedaten 5 Informationen betreffend mindestens einem Beförderungsmittel 8a-8g zwischen den Montagestationen 6a-6h der Montageanordnung 2 umfassen. Ferner können die Informationen der Montagedaten 5 eine Richtungsabhängigkeit aufweisen. Die empfangenen Montagedaten 5 können ferner Strukturdaten 10 aufweisen, die für das Vorliegen von Hauptlinien 11, welche eine Endmontage des zu erstellenden Produkts 3 betreffen, und Nebenlinien 13, welche eine Vormontage des zu erstellenden Produkts 3 betreffen, in der Montageanordnung 2 kennzeichnend sind. Die empfangenen Montagedaten 5 können ferner auf einer Montagesimulation oder auf einer realen Montagekonfiguration basieren.

Gemäß der in Figur 3 dargestellten Ausführungsform können die Schritte 110 und 115 parallel und nebeneinander ablaufen. Es ist jedoch auch vorgesehen, dass die Schritte 110 und 115 nacheinander ablaufen, wobei beide Schritte 110 und 115 jeweils vor dem anderen der beiden Schritte durchgeführt werden können.

Bei 120 kann das Verfahren 100 ferner die Anweisung 1 basierend auf den empfangenen Produktdaten 4 und den empfangenen Montagedaten 5 ermitteln. Dabei kann die ermittelte Anweisung 1 Informationen betreffend eine Montageabfolge des zu erstellenden Produkts 3 aufweisen. Ferner kann das Ermitteln 120 der Anweisung 1 mittels eines Planungsalgorithmus erfolgen, welcher auf einer virtuellen Demontage des zu erstellenden Produkts 3 basiert.

Bei 130 kann das Verfahren 100 ferner die ermittelte Anweisung 1 ausgeben. Die ermittelte Anweisung 1 kann dabei eine Priorisierungsliste möglicher Montageabläufe umfassen. Dabei kann die Priorisierungsliste der möglichen Montageabläufe auf einer realisierbaren Montagedauer des zu erstellenden Produkts 3 basieren. Das Ausgeben 130 der ermittelten Anweisung 1 kann mittels einer graphischen Visualisierungseinrichtung 15 erfolgen. Eine derartige graphische Visualisierungseinrichtung 15 kann beispielsweise ein Bildschirm sein.

In Figur 4 ist eine Vorrichtung, welche zum Bereitstellen einer Anweisung 1 betreffend einen Montageablauf für die Erstellung eines Produkts 3 eingerichtet ist, gemäß einer Ausführungsform schematisch dargestellt.

Die Vorrichtung kann hiernach eine erste Empfangseinrichtung 17 aufweisen, welche zum Empfangen von Produktdaten 4, welche für die Erstellung des Produktes 3 kennzeichnend sind, eingerichtet ist.

Die Vorrichtung 16 kann ferner eine zweite Empfangseinrichtung 18 aufweisen, welche zum Empfangen von Montagedaten 5, welche für eine Montageanordnung 2 zum Erstellen des Produktes 3 kennzeichnend sind, eingerichtet ist. Dabei können die Montagedaten 5 ferner die Strukturdaten 10 aufweisen.

Die Vorrichtung 16 kann ferner eine Ermittlungseinrichtung 19 aufweisen, welche zum Ermitteln der Anweisung 1 basierend auf den empfangenen Produktdaten 4 und den empfangenen Montagedaten 5 eingerichtet ist.

Die Vorrichtung 16 kann ferner eine Ausgabeeinrichtung 20 aufweisen, welche zum Ausgeben der ermittelten Anweisung 1 eingerichtet ist. Die ermittelte Anweisung 1 kann dabei über eine graphische Visualisierungseinrichtung 15, beispielsweise in der Ausgestaltung eines Bildschirmes, ausgegeben werden.

Die Vorrichtung 16 kann dabei ferner zum Ausführen des Verfahrens 100 gemäß einer der vorangehenden Ausführungsformen eingerichtet sein.

## Patentansprüche

1. Verfahren (100) zum Bereitstellen einer Anweisung (1), welche einen Montageablauf für die Erstellung eines Produktes (3) betrifft, aufweisend die folgenden Schritte:
Empfangen (110) von Produktdaten (4), welche für die Erstellung des Produktes (3) kennzeichnend sind,
Empfangen (115) von Montagedaten (5), welche für eine Montageanordnung (2) mit einer oder mehreren Montagestationen (6) zum Erstellen des Produktes (3) kennzeichnend sind,
Ermitteln (120) der Anweisung (1) basierend auf den empfangenen Produktdaten (4) und den empfangenen Montagedaten (5), und
Ausgeben (130) der ermittelten Anweisung (1).

2. Verfahren (100) nach Anspruch 1, wobei die ermittelte Anweisung (1) Informationen betreffend eine Montageabfolge des zu erstellenden Produkts (3) aufweist.

3. Verfahren (100) nach Anspruch 2, wobei mindestens einem Schritt der Montageabfolge eine der Montagestationen (6a-6h) der Montageanordnung (2) zugewiesen wird.

4. Verfahren (100) nach einem der vorhergehenden Ansprüche, wobei das Ermitteln (120) der Anweisung (1) mittels eines Planungsalgorithmus erfolgt, welcher auf einer virtuellen Demontage des zu erstellenden Produkts (3) basiert.

5. Verfahren (100) nach einem der vorhergehenden Ansprüche, wobei die Montagedaten (5) Informationen betreffend der Montagefähigkeit der einen oder mehreren Montagestationen (6a-6h) der Montageanordnung (2) umfassen.

6. Verfahren (100) nach einem der vorhergehenden Ansprüche, wobei die Montagedaten (5) Informationen betreffend mindestens einem Beförderungsmittel (8a-8g) zwischen Montagestationen (6a-6h) der Montageanordnung (2) umfassen.

7. Verfahren (100) nach Anspruch 6, wobei die Informationen der Montagedaten (5) eine Richtungsabhängigkeit aufweisen.

8. Verfahren (100) nach einem der vorhergehenden Ansprüche, wobei die ermittelte Anweisung (1) eine Priorisierungsliste möglicher Montageabläufe umfasst.

9. Verfahren (100) nach Anspruch 8, wobei die Priorisierungsliste der möglichen Montageabläufe auf einer realisierbaren Montagedauer des zu erstellenden Produkts (3) basiert.

10. Verfahren (100) nach einem der vorhergehenden Ansprüche, wobei die empfangenen Montagedaten (5) ferner Strukturdaten (10) aufweisen, welche für das Vorliegen von Hauptlinien (11), welche eine Endmontage des zu erstellenden Produkts (3) betreffen, und Nebenlinien (13), welche eine Vormontage des zu erstellenden Produkts (3) betreffen, in der Montageanordnung (2) kennzeichnend sind.

11. Verfahren (100) nach einem der vorhergehenden Ansprüche, wobei die Produktdaten (4) ein dreidimensionales CAD-Modell des zu erstellenden Produkts (3) aufweisen.

12. Verfahren (100) nach einem der vorhergehenden Ansprüche, wobei die empfangenen Montagedaten (5) auf einer Montagesimulation oder auf einer realen Montagekonfiguration basieren.

13. Verfahren (100) nach einem der vorhergehenden Ansprüche, wobei das Ausgeben (130) der ermittelten Anweisung (1) mittels einer graphischen Visualisierungseinrichtung (15) erfolgt.

14. Vorrichtung (16), eingerichtet zum Bereitstellen einer Anweisung (1), welche einen Montageablauf für die Erstellung eines Produktes (3) betrifft, aufweisend:
eine erste Empfangseinrichtung (17), eingerichtet zum Empfangen von Produktdaten (4), welche für die Erstellung des Produktes (3) kennzeichnend sind,
eine zweite Empfangseinrichtung (18), eingerichtet zum Empfangen von Montagedaten (5), welche für eine Montageanordnung (2) zum Erstellen des Produktes (3) kennzeichnend sind,
eine Ermittlungseinrichtung (19), eingerichtet zum Ermitteln der Anweisung (1) basierend auf den empfangenen Produktdaten (4) und den empfangenen Montagedaten (5), und
eine Ausgabeeinrichtung (20), eingerichtet zum Ausgeben der ermittelten Anweisung (1).

15. Vorrichtung nach Anspruch 14, welche zum Ausführen eines Verfahrens (100) gemäß einem der Ansprüche 2 bis 13 eingerichtet ist.
